# EUROPEAN PATENT SPECIFICATION

(11) **EP 3 732 986 B1**
(45) Date of publication and mention of the grant of the patent: **08.04.2026**
(21) Application number: 18895176.8
(22) Date of filing: 21.12.2018
(51) Int. Cl.: A23C 9/15, A23C 9/12, A23C 9/16

(54) **METHOD OF PRODUCING A FERMENTED MILK PRODUCT**
METHODE ZUR HERSTELLUNG EINES FERMENTIERTEN MILCHPRODUKTS
METHODE DE PRODUCTION D'UN PRODUIT LAITIER FERMENTE

(30) Priority: 25.12.2017 JP 2017247228
(43) Date of publication of application: 04.11.2020
(73) Proprietor: MEIJI CO., LTD, Chuo-ku Tokyo 104-8306 (JP)
(72) Inventor: GOTO, Hirofumi, Tokyo 192-0919 (JP); MAKABE, Yoshimi, Tokyo 192-0919 (JP); MIZOGUCHI, Chinami, Tokyo 192-0919 (JP)
(74) Representative: TBK
(86) International application number: PCT/JP2018/047217
(87) International publication number: WO 2019/131497

(56) References cited:
- WO-A1-2009/041045
- JP-A- 2015 500 484
- JP-A- H05 292 879
- DATABASE FSTA [online] INTERNATIONAL FOOD INFORMATION SERVICE (IFIS), FRANkFURT-MAIN, DE; BLONDEAU T ET AL: "Effects of the composition of various European dried milks on the properties of yoghurt. (translated)", XP002804129, Database accession no. FS-1993-10-P-0146
- BLONDEAU T, GOURSOUD J, INDUSTRIES ALIMENTAIRES ET AGRICOLES, vol. 109, no. 1/2, 31 December 1992 (1992-12-31), INDUSTRIES ALIMENTAIRES ET AGRICOLES 1992 ENSIA, SERVICE D'IND. LAITIERE, BP 39, 369 RUE JULES GUESDE, 59651 VILLENEUVE D'ASCQ, FRANCE, pages 28
- MASUDA TETSUYA ET AL: "Trial Production of Fermented Goat Milk Containing Probiotic Lactobacillus acidophilus", NIPPON SHOKUHIN KAGAKU KAISHI, vol. 52, no. 3, 1 January 2005 (2005-01-01), pages 131 - 134, XP055335807, DOI: 10.3136/nskkk.52.131
- DATABASE FSTA [online] INTERNATIONAL FOOD INFORMATION SERVICE (IFIS), FRANkFURT-MAIN, DE; BLONDEAU T ET AL: "Effects of the composition of various European dried milks on the properties of yoghurt. (translated)", XP002804129, Database accession no. FS-1993-10-P-0146
- ANTON J. PLASSER ET AL: "NPN-Komponenten der Milch als analytische Indikatoren in Lebensmitteln", ZEITSCHRIFT F�R LEBENSMITTEL-UNTERSUCHUNG UND -FORSCHUNG, vol. 187, no. 6, 1 December 1988 (1988-12-01), pages 552 - 557, XP055622457, ISSN: 0044-3026, DOI: 10.1007/BF01042388
- PROSSER COLIN G. ET AL: "Composition of the non-protein nitrogen fraction of goat whole milk powder and goat milk-based infant and follow-on formulae", INTERNATIONAL JOURNAL OF FOOD SCIENCES AND NUTRITION, vol. 59, no. 2, 1 January 2008 (2008-01-01), GB, pages 123 - 133, XP055838252, ISSN: 0963-7486, Retrieved from the Internet <URL:https://www.tandfonline.com/doi/pdf/10.1080/09637480701425585?needAccess=true> DOI: 10.1080/09637480701425585
- OLALLA M ET AL: "Nitrogen fractions of Andalusian goat milk compared to similar types of commercial milk", FOOD CHEMISTRY, ELSEVIER LTD, NL, vol. 113, no. 3, 1 April 2009 (2009-04-01), pages 835 - 838, XP025674875, ISSN: 0308-8146, [retrieved on 20081017], DOI: 10.1016/J.FOODCHEM.2008.10.022
- PLASSER, ANTON J. ET AL.: "NPN-Komponenten der Milch als analytische Indikatoren in Lebensmitteln", ZEITSCHRIFT FUER LEBENSMITTEL- UNTERSUCHUNG UND -FORSCHUNG. A. FOOD RESEARCH AND TECHNOLOGY, vol. 187, no. 6, December 1988 (1988-12-01), pages 552 - 557, XP055622457
- OLALLA, MANUEL ET AL.: "Nitrogen fractions of Andalusian goat milk compared to similar types of commercial milk", FOOD CHEMISTRY, vol. 113, 2009, pages 835 - 838, XP025674875, doi:10.1016/j.foodchem.2008.10.022

## Description

### TECHNICAL FIELD

The present invention relates to a method for producing yogurt and a method for evaluating fermentability.

### BACKGROUND OF THE INVENTION

In the production of yoghurt, skim milk powder is used as a source of Solids Not Fat (SNF). The skim milk powder is a powder obtained by sterilizing, concentrating, and spray-drying skim milk obtained by separating cream from raw milk. The properties of dairy ingredients such as skim milk powder have various influences on the production efficiency and quality of yoghurt. Therefore, various methods related to yoghurt production have been proposed, such as shortening of fermentation time, improvement of rheology of yoghurt, and improvement of survivability of lactic acid bacteria.

Japanese published unexamined patent application H11-028056 discloses that, when a milk protein concentrate and a lactose-free permeate are blended in a dairy ingredient mix, fermentation is promoted and fermentation time is shortened to obtain a fermented milk excellent in hardness, viscosity, flavor, and the like (Patent Document 1). Furthermore, International Publication 2010/113680 discloses that although the number of lactic acid bacteria in a culture of lactic acid bacteria cannot be stably maintained in a culture medium including a milk component having a free phosphoric acid concentration of less than 0.25% by mass as a raw material, the number of lactic acid bacteria in a culture of lactic acid bacteria can be stably maintained by adding phosphate to the culture medium (Patent Document 2).

### PRIOR ART DOCUMENT

### PATENT DOCUMENT

[Patent Document 1] Japanese published unexamined patent application H11-028056
[Patent Document 2] International Publication 2010/113680

MASUDA TETSUYA et al., "Trial Production of Fermented Goat Milk Containing Probiotic Lactobacillus acidophilus", NIPPON SHOKUHIN KAGAKU KAISHI, (20050101), vol. 52, no. 3, pages 131 - 134, examined the growth characteristics of test strains in goat milk and the survival of *L. acidophilus* during trial yogurt refrigeration.

BLONDEAU T et al., "Effects of the composition of various European dried milks on the properties of yoghurt. (translated)", FSTA, INTERNATIONAL FOOD INFORMATION SERVICE (IFIS), Frankfurt/Main, DE, Database accession no. FS-1993-10-P-0146 describes the use of seven European brands of skim milk to manufacture yoghurt and the effects on the final products.

### SUMMARY OF THE INVENTION

### PROBLEM TO BE SOLVED BY THE INVENTION

Since the composition of skim milk powder varies depending on the season, region, and manufacturing conditions, it is difficult to maintain a constant quality of skim milk powder at all times. For example, depending on the type of skim milk powder, fermentability is poor, and fermentation delay may occur in production of yoghurt. When the fermentation delay occurs, problems such as deterioration of production efficiency of yogurt and deterioration of quality occur. Therefore, if a substance that is correlated with its concentration and fermentation time is identified among the components of the skim milk powder, and if it is used as an index of the fermentability of the skim milk powder, it is possible to develop and select skim milk powder having excellent fermentability, and it is possible to prevent the fermentation delay in the production of yoghurt. As described above, it is an objective of the present invention to provide the use of a skim milk powder excellent in fermentability containing an optimal amount of the indicator substance, and a method for evaluating the fermentability of the skim milk powder using the indicator substance.

### MEANS TO SOLVE THE PROBLEM

In order to solve the above-mentioned problems, the present inventors carried out component analysis and fermentability test of skim milk powder in detail. As a result, it was found that the skim milk powder having a high homoserine concentration and/or a high creatinine concentration shortens a fermentation time in production of yogurt, that is, such skim milk powder has excellent fermentability, and thus the present invention was completed.

That is, the present invention is defined in the claims and relates to:
- A method for producing yogurt by fermenting a skim milk powder, a whole milk powder, or a skim concentrated milk comprising:
   (A-1) preparing a 10% reconstituted skim milk powder from the skim milk powder, or a 10% reconstituted whole milk powder from the whole milk powder,
   (A-2) measuring the homoserine concentration and the creatinine concentration in the 10% reconstituted skim milk powder or in the 10% reconstituted whole milk powder, and
   (A-3) fermenting the skim milk powder or the whole milk powder with a homoserine concentration of 3.4pM or more and a creatinine concentration of 950µM or more in the 10% reconstituted skim milk powder or in the 10% reconstituted whole milk powder, with a lactic acid bacterium, or
   (B-1) measuring the homoserine concentration and the creatinine concentration in the skim concentrated milk, and
   (B-2) fermenting the skim concentrated milk with a homoserine concentration of 3.4pM or more and a creatinine concentration of 950µM or more, with a lactic acid bacterium.
   and to:
   - A method for evaluating fermentability of a skim milk powder, a whole milk powder or a skim concentrated milk, characterized in that a 10% reconstituted skim milk powder or a 10% reconstituted whole powder milk is prepared, and the concentration of homoserine and the concentration of creatinine in the reconstituted skim milk powder or in the reconstituted whole powder milk is determined, or the concentration of homoserine and the concentration of creatinine in the skim concentrated milk is determined.

### EFFECT OF THE INVENTION

According to the present invention, by using the skim milk powder having a high homoserine concentration and/or a high creatinine concentration in production of yoghurt, fermentation delay due to the nature of the skim milk powder can be prevented, and it is possible to improve the efficiency of yoghurt production by shortening the fermentation time. The fermentability of skim milk powder can be evaluated quickly and conveniently by quantifying the concentration of homoserine and/or creatinine in the skim milk powder.

### EMBODIMENT FOR CARRYING OUT THE INVENTION

In the present invention, skim milk powder refers to material obtained by drying a skim milk, which is material obtained by removing most of the milk fat content from animal milk, and cow's milk has 8.0% or more of Solids Not Fat and less than 0.5% of the milk fat content milk.

The skim milk powder used in the present invention contains homoserine. Homoserine is one of the amino acids and is thought to be a precursor of cystathionine in vivo. In the present invention, homoserine is one of indices of fermentability of skim milk powder. The concentration of homoserine in the skim milk powder used in the present invention can be quantified by preparing a 10% reconstituted skim milk powder of the skim milk powder. The homoserine concentration in the 10% reconstituted skim milk powder is not particularly limited as long as it is in a range that does not cause a fermentation delay, but the lower limit thereof is preferably 3.4µM, more preferably 3.7µM, and still more preferably 4.0µM. When the concentration is 3.4µM or more, fermentation is likely to be promoted in production of yogurt. The upper limit of the homoserine concentration in the 10% reconstituted skim milk powder is not particularly limited, but is preferably 7.0µM, more preferably 6.0µM, and still more preferably 5.5µM. The range of the concentration of homoserine in the skim milk powder of the present invention can be set by arbitrarily combining the lower limit value and the upper limit value.

Here, "10% reconstituted skim milk powder" is obtained by dissolving skim milk powder in water at a concentration of 10% by weight.

The skim milk powder used in the present invention contains creatinine. Creatinine is an anhydride of creatine, which is excreted in the urine in vivo as a metabolite of creatine in muscle cells. In the present invention, creatinine is one of indices of fermentability of skim milk powder. The creatinine concentration in the skim milk powder used in the present invention may be quantified by preparing a 10% reconstituted skim milk powder of the skim milk powder. The creatinine concentration in the 10% reconstituted skim milk powder is not particularly limited as long as it is in a range that does not cause a fermentation delay, but the lower limit thereof is preferably 950µM, more preferably 1000µM, and still more preferably 1100µM. When the concentration is 950µM or more, fermentation is likely to be promoted in production of yogurt. The upper limit of the creatinine concentration in the 10% reconstituted skim milk powder is not particularly limited, but is preferably 1700µM, more preferably 1600µM, and still more preferably 1500µM. The range of the creatinine concentration in the skim milk powder of the present invention can be set by arbitrarily combining the lower limit value and the upper limit value.

The fermentation index of skim milk powder of the present invention uses homoserine and creatinine, since the fermentability of powdered milk can be evaluated more accurately by using both.

In addition, both homoserine and creatinine as index of fermentability of the present invention can be applied to skim concentrated milk or whole milk powder. The skim concentrated milk is a liquid obtained by sterilizing and concentrating skim milk obtained by separating cream from raw milk, and the whole milk powder is a powder obtained by removing moisture from raw milk, cow's milk and special milk.

The skim milk powder used in the present invention can also be prepared by adding homoserine or creatinine to a skim milk powder.

The skim milk powder used in the present invention exhibits excellent fermentability. Specifically, the time required when yogurt is produced using the skim dry milk of the present invention is much shorter than the fermentation time in the production of yogurt using the conventional skim dry milk. Here, the method for measuring the fermentation time is not particularly limited as long as it is a general method, and for example, the fermentation time can be the time required to reach the pH of 4.6 when a predetermined amount of 10% reconstituted skim milk powder is inoculated with a predetermined amount of a frozen culture consisting of L. bulgaricus and S. thermophilus as a fermentation milk starter and fermented at 43° C. In the present invention, the lower limit of the fermentation time is not particularly limited, but is preferably 240 minutes, more preferably 270 minutes, and still more preferably 300 minutes.

In the present invention, the method for producing yogurt is not particularly limited as long as it is a general method, and the method comprises, for example, a step of preparing a fermented milk mix using a dairy ingredient such as skim milk powder, a step of heat-sterilizing the fermented milk mix, and a step of adding a fermented milk starter to the heat-sterilized fermented milk mix to ferment the fermented milk mix. The fermented milk mix is a raw material preparation in which a raw material of fermented milk is mixed, and is prepared by adding (blending) water, sugar, sweetener, stabilizer, flavor, and the like to a dairy ingredient such as skim milk powder, and dissolving while warming as necessary. Starter is meant a inoculum, a lactic acid bacteria, that is inoculated to ferment the fermented milk mix. In the present invention, a lactic acid bacteria starter is used as the starter. Lactobacillus bulgaricas (L. bulgaricus) and streptococcus thermofils (S. thermophilus) can be used as the lactic acid bacteria starter. The addition amount of the starter can be appropriately set according to the addition amount setting method employed in a general method for producing fermented milk. Also, the method of inoculating the starter is not particularly limited, and a method commonly used in the production of fermented milk can be appropriately used. The conditions of the fermentation treatment can be appropriately set in consideration of the type of the fermented milk, the desired flavor, the type of the starter to be used, and the like.

In the present invention, the yogurt includes, for example, "fermented milk" or "lactic acid bacteria beverage" defined by "the Ministerial Ordinance concerning Compositional Standards, Etc. for Milk and Milk Products". "Fermented milk" in "the Ministerial Ordinance concerning Compositional Standards, Etc. for Milk and Milk Products" is defined as "milk or milk containing an equal or higher amount of Solids Not Fat that is fermented with lactic acid bacteria or yeast, made into glue or liquid" or "frozen thereof." Yogurt is classified into "set-type yogurt fermented and solidified after container filling (solid-state fermented milk, set-type yogurt)", "stirred yogurt in which a curd is crushed and container-filled after fermentation (paste-like fermented milk)", "drink yogurt in which stirred yogurt is further finely crushed by a homogenizer and liquid properties are enhanced(liquid-state fermented milk)". In addition, "lactic acid bacteria beverage" in "the Ministerial Ordinance concerning Compositional Standards, Etc. for Milk and Milk Products" refers to "beverages (excluding fermented milk) made by processing milk and the like fermented with milk and the like or using it as the main raw material."

The present invention is also a method for evaluating fermentability of skim milk powder characterized in that the concentration of homoserine and the concentration of creatinine in the skim milk powder is quantified. The higher the homoserine and creatinine concentration is, the better the fermentability is. Here, as a method for quantifying the homoserine concentration in the present invention, mass spectrometry (hereinafter referred to as MS) is employed. The high performance liquid chromatography (HPLC) method may be used as an alternative method on the assumption that the measured values coincide with the measured values in the MS-method. As a method for quantifying the creatinine concentration, the MS method is employed. HPLC method may be used as an alternative method on the assumption that the measured values coincide with those in the MS method.

### EXAMPLES

Hereinafter, the present invention will be described in more detail using working examples. The working examples do not limit the present invention.

For each of 10 kinds of skim milk powder, 80g of 10% reconstituted skim milk powder was prepared. This was inoculated with 0.15% of a frozen bacterium consisting of a strain of L. bulgaricus and a strain of S. thermophilus, and then fermented at 43° C., and the time required for the pH to reach 4.6 was measured, and the measured time was used as the fermentation time.

The homoserine concentration and creatinine concentration of these 10% reconstituted skim milk powder were measured by mass spectrometry.

Table 1 shows the fermentation time, homoserine concentration, and creatinine concentration of each skim milk powder. Incidentally, the homoserine concentration and creatinine concentration in the skim milk powder are a value calculated from the homoserine concentration and creatinine concentration in the 10% reduction skim milk powder solution.

**[Table 1]**

| Sample | Fermentation time (min) | 10% reduced skim milk powder | | Skim milk powder | |
|---|---|---|---|---|---|
| | | Homoserine (µM) | Creatinine (µM) | Homoserine (ppt) | Creatinine (ppt) |
| 1 | 240 | 6.0 | 1487 | 6.4 | 1514 |
| 2 | 245 | 5.9 | 1647 | 6.3 | 1677 |
| 3 | 295 | 3.8 | 1467 | 4.1 | 1493 |
| 4 | 320 | 3.4 | 993 | 3.6 | 1011 |
| 5 | 345 | 3.7 | 950 | 4.0 | 967 |
| 6 | 380 | 2.8 | 913 | 3.0 | 929 |
| 7 | 385 | 2.5 | 851 | 2.7 | 866 |
| 8 | 390 | 2.3 | 644 | 2.5 | 655 |
| 9 | 400 | 2.6 | 857 | 2.8 | 873 |

From the results shown in Table 1, it was found that as the concentration of homoserine and creatinine in the skim milk powder were higher, the fermentation time of the skim milk powder was shorter. Specifically, it was shown that the fermentation time was less than 320 minutes when the homoserine concentration is in the range of 3.4µM or more and 6.0µM or less when 10% reconstituted skim milk powder was prepared, and the fermentation time was less than 345 minutes when the creatinine concentration is in the range of 950µM or more and 1647µM or less when 10% reconstituted skim milk powder was prepared. In particular, it has been shown that the fermentation time is less than 300 minutes and the fermentation time of skim milk powder is very short when the homoserine concentration in the case of preparing 10% reconstituted skim milk powder is within the range of 3.8µM or more and 6.0µM or less, or when the creatinine concentration in the case of preparing 10% reconstituted skim milk powder is within the range of 1467µM or more and 1647µM or less. From this fact, it was shown that the skim milk powder with high homoserine concentration and creatinine concentration was excellent in the fermentability.

### INDUSTRIAL APPLICABILITY

According to the present invention, it has been found that skim milk powder having a high concentration of homoserine and creatinine shortens fermentation time in production of yoghurt and is excellent in fermentability. In addition, the present invention is very useful in industry because it makes it possible to prevent the fermentation delay caused by the properties of skim milk powder and to improve the efficiency of yogurt production by shortening the fermentation time.

## Claims

1. A method for producing yogurt by fermenting a skim milk powder, a whole milk powder, or a skim concentrated milk comprising:
(A-1) preparing a 10% reconstituted skim milk powder from the skim milk powder, or a 10% reconstituted whole milk powder from the whole milk powder,
(A-2) measuring the homoserine concentration and the creatinine concentration in the 10% reconstituted skim milk powder or in the 10% reconstituted whole milk powder, and
(A-3) fermenting the skim milk powder or the whole milk powder with a homoserine concentration of 3.4pM or more and a creatinine concentration of 950µM or more in the 10% reconstituted skim milk powder or in the 10% reconstituted whole milk powder, with a lactic acid bacterium,
or
(B-1) measuring the homoserine concentration and the creatinine concentration in the skim concentrated milk, and
(B-2) fermenting the skim concentrated milk with a homoserine concentration of 3.4pM or more and a creatinine concentration of 950µM or more, with a lactic acid bacterium.

2. A method for evaluating fermentability of a skim milk powder, a whole milk powder or a skim concentrated milk, **characterized in that** a 10% reconstituted skim milk powder or a 10% reconstituted whole powder milk is prepared, and the concentration of homoserine and the concentration of creatinine in the reconstituted skim milk powder or in the reconstituted whole powder milk is determined, or the concentration of homoserine and the concentration of creatinine in the skim concentrated milk is determined.

3. The method for evaluating fermentability of skim milk powder, a whole milk powder or a skim concentrated milk according to claim 2, wherein the determination method is a HPLC method or a MS method.

## Patentansprüche

1. Verfahren zur Herstellung von Joghurt durch Fermentieren von Magermilchpulver, Vollmilchpulver oder Magermilchkonzentrat, umfassend:
(A-1) Herstellen eines 10%igen rekonstituierten Magermilchpulvers aus dem Magermilchpulver oder eines 10%igen rekonstituierten Vollmilchpulvers aus dem Vollmilchpulver,
(A-2) Messen der Homoserin-Konzentration und der Kreatinin-Konzentration in dem 10%igen rekonstituierten Magermilchpulver oder in dem 10%igen rekonstituierten Vollmilchpulver und
(A-3) Fermentieren des Magermilchpulvers oder des Vollmilchpulvers mit einer Homoserin-Konzentration von 3,4 µM oder mehr und einer Kreatinin-Konzentration von 950 µM oder mehr in dem 1%igen rekonstituierten Magermilchpulver oder in dem 10%igen rekonstituierten Vollmilchpulver mit einem Milchsäurebakterium,
oder
(B-1) Messen der Homoserin-Konzentration und der Kreatinin-Konzentration in der Magermilchkonzentrat, und
(B-2) Fermentieren der Magermilchkonzentrat mit einer Homoserin-Konzentration von 3,4 µM oder mehr und einer Kreatinin-Konzentration von 950 µM oder mehr mit einem Milchsäurebakterium.

2. Verfahren zur Bewertung der Fermentierbarkeit von Magermilchpulver, Vollmilchpulver oder Magermilchkonzentrat, **dadurch gekennzeichnet, dass** ein 10%iges rekonstituiertes Magermilchpulver oder ein 10%iges rekonstituiertes Vollmilchpulver hergestellt wird und die Homoserin-Konzentration und die Kreatinin-Konzentration in dem rekonstituierten Magermilchpulver oder in dem rekonstituierten Vollmilchpulver bestimmt wird oder die Homoserin-Konzentration und die Kreatinin-Konzentration in dem Magermilchkonzentrat bestimmt wird.

3. Verfahren zur Bewertung der Fermentierbarkeit von Magermilchpulver, Vollmilchpulver oder Magermilchkonzentrat nach Anspruch 2, wobei das Bestimmungsverfahren ein HPLC-Verfahren oder ein MS-Verfahren ist.

## Revendications

1. Procédé de production de yaourt par fermentation d'une poudre de lait écrémé, d'une poudre de lait entier ou d'un lait concentré écrémé comprenant :
(A-1) la préparation d'une poudre de lait écrémé reconstitué à 10 % à partir de la poudre de lait écrémé, ou d'une poudre de lait entier reconstitué à 10 % à partir de la poudre de lait entier,
(A-2) la mesure de la concentration en homosérine et de la concentration en créatinine dans la poudre de lait écrémé reconstitué à 10 % ou dans la poudre de lait entier reconstitué à 10 %, et
(A-3) la fermentation de la poudre de lait écrémé ou de la poudre de lait entier ayant une concentration en homosérine de 3,4 µM ou plus et une concentration en créatinine de 950 µM ou plus dans la poudre de lait écrémé reconstitué à 10 % ou dans la poudre de lait entier reconstituée à 10 %, avec une bactérie d'acide lactique,
ou
(B-1) la mesure de la concentration en homosérine et de la concentration en créatinine dans le lait concentré écrémé, et
(B-2) la fermentation du lait concentré écrémé ayant une concentration en homosérine de 3,4 µM ou plus et une concentration en créatinine de 950 µM ou plus, avec une bactérie d'acide lactique.

2. Procédé d'évaluation de la fermentabilité d'une poudre de lait écrémé, d'une poudre de lait entier ou d'un lait écrémé concentré, **caractérisé en ce qu'**une poudre de lait écrémé reconstitué à 10 % ou un lait en poudre entier reconstitué à 10 % est préparé(e) et la concentration d'homosérine et la concentration de créatinine dans la poudre de lait écrémé reconstitué ou dans le lait en poudre entier reconstitué est déterminée, ou la concentration d'homosérine et la concentration de créatinine dans le lait concentré écrémé est déterminée.

3. Procédé pour l'évaluation de la fermentabilité d'une poudre de lait écrémé, d'une poudre de lait entier ou d'un lait concentré écrémé selon la revendication 2, dans lequel le procédé de détermination est un procédé de HPLC ou un procédé de MS.
